# EUROPEAN PATENT SPECIFICATION

(11) **EP 0 420 694 B1**
(45) Date of publication and mention of the grant of the patent: **26.04.1995**
(21) Application number: 90310683.9
(22) Date of filing: 28.09.1990
(51) Int. Cl.: G11B 11/10

(54) **Magneto-optical storage system**
Magneto-optisches Speichersystem
Système d'emmagasinage magnéto-optique

(30) Priority: 29.09.1989 US 414868
(43) Date of publication of application: 03.04.1991
(73) Proprietor: INTERNATIONAL BUSINESS MACHINES CORPORATION, Armonk, NY 10504 (US)
(72) Inventor: Levenson, Marc David, Saratoga, CA 95070 (US)
(74) Representative: Moss, Robert Douglas

(56) References cited:
- EP-A- 0 243 656
- EP-A- 0 295 572
- US-A- 4 646 103
- US-A- 4 866 692
- TOPICAL MEETING ON OPTICAL DATA STORAGE, TECHNICAL DIGEST SERIES, OPTICAL SOCIETY OF AMERICA, vol. 10, March 1987, WASHINGTON, D. C., U.S.A., pages 30 - 33, J. REVELLI ET AL.: "Magneto-Optic Compensator for MO Disk Substrate Birefringence"
- PATENT ABSTRACTS OF JAPAN vol. 11, no. 84 (P-556)(1629) 13 March 1987
- PATENT ABSTRACTS OF JAPAN vol. 8, no. 192 (P-298)(1629) 4 September 1984
- IEEE TRANSLATION JOURNAL ON MAGNETICS IN JAPAN vol. 3, no. 12, December 1988,NEW YORK, U.S.A. pages 848 - 856 , XP000099864 SUKEDA ET AL. 'High Speed Magnetic Field Modulation in Pit-Edge Magneto-Optic Recording.'
- JAPANESE JOURNAL OF APPIED PHYSICS / SUPPLEMENTS vol. 26, no. 4, 1987, TOKYO,JAPAN pages 243 - 248 SUKEDA ET AL. 'High-Density Magneto-Optic Disk Using Highly Controlled Pit-Edge Recording.'

## Description

### Technical Field of the Invention

This invention relates to optical storage, and more particularly to a detection system for magneto-optical storage.

### Background of the Invention

Optical recording systems have come into use in recent years because of their potential for high density recording. One approach for optical recording is magneto-optical recording in which a focused laser beam is pulsed to high power for a short time to raise the temperature of a perpendicularly magnetized recording medium sufficiently for an externally applied magnetic field to reverse the direction of magnetization in the heated region. When the medium returns to a lower temperature for readout, the reverse-magnetized domain persists. Readout of information employs the polar Kerr effect. Linearly polarized light, reflected from a perpendicularly magnetized medium, is rotated to the left or right, according to the direction of the magnetisation. By checking the direction of the plane of polarization of the reflected light, magnetization direction along a recorded track can be read out by the same focused laser beam that was used for recording information.

A detector system is provided to sense the magnetic transitions, and to provide focusing and tracking signals to maintain the laser spot in precise position relative to the disk surface and data tracks. In magneto-optical storage systems with Pulse Width Modulation (PWM), the locations of the bits are encoded by the positions of transitions between up and down magnetic domains. In prior art systems, these transitions have been sensed electronically as a change in the difference between the currents produced by two light detectors.

For example, JP-A- 59-79446 shows apparatus including two detectors each of which is sensitive to light orientated in one direction. This detection apparatus essentially discards one-half of the signal light.

EP-A-295572 discloses a magneto-optical system in which a light beam reflected from the recording medium is changed in phase by a wave plate. The differently polarised components of the reflected beam from the wave plate are combined by an analyzer and are received by a photodetector whose light receiving face is divided into forward and backward parts with respect to the direction of motion of the medium.

U.S. patent 3,992,575 has apparatus for changing the optical path length so that three different lengths can be obtained for determining whether the read beam is properly focused, and U.S. patent 4,065,786 discloses a push-pull tracking system which senses the detected signal and a tracking error signal which permits the beam to be maintained on track.

U.S. patent 4,059,841 discloses a non-magneto-optical system which utilizes four detectors and differential reading of the signal along the track. The detection signal is obtained by means of electronic circuits which add electrical noise. The signal-to-noise ratio imposes a limit on the minimum bit size that can be recorded so the added electrical noise directly impacts the recording density that can be achieved.

### Disclosure of the Invention

It is therefore an aim of this invention to provide a magneto-optical storage detection system in which the edges of the magneto-optical domains are detected optically.

Accordingly the invention provides a magneto-optical storage system comprising: a source of radiation; means for directing radiation from the source to a storage medium upon which data is recorded in the form of marks defined by domains of a first and a second magnetization state; means for directing the radiation reflected from said recorded mark to a detection channel; said channel comprising a beam adjustment means, a first and a second optical detector in optical communication with the beam adjustment means, said beam adjustment means comprising birefringent compensator means and an optical matched filter arranged to adjust the reflected radiation beam such that when the radiation incident on said medium is located on a transition between said first and second magnetization states, the amount of reflected radiation on said first optical detector will be substantially unequal to the amount of reflected radiation on said second optical detector, and when said radiation incident on the medium is located on a nontransition area, the amount of reflected radiation on said first optical detector will be approximately equal to the amount of reflected radiation on said second optical detector.

Preferred embodiments of the present invention will now be described, by way of example only, with reference to the accompanying drawings.

### Brief Description of the Drawings

Fig. 1 schematically shows a magneto-optical storage system according to the present invention;
Fig. 2 shows the signal waveform which results from detection of a recorded transition in a magneto-optical storage system according to the present invention;
Fig. 3 shows an alternate embodiment of a magneto-optical storage system according to the present invention;
Fig. 3a shows a specific embodiment of a split photodetector employed in the system of figure 3;
Fig. 4 schematically shows an alternate embodiment of a magneto-optical storage system according to the present invention;
Fig. 5 shows the signal waveform which results from detection of a recorded transition in the system of Fig. 4;
Fig. 6 shows an alternate embodiment of the magneto-optical storage system of Fig. 4;
Fig. 7 shows a birefringement element employed in the system of Figure 6;
Fig. 8 is a further embodiment of a magneto-optical storage system according to the present invention.

### Detailed Description of the Invention

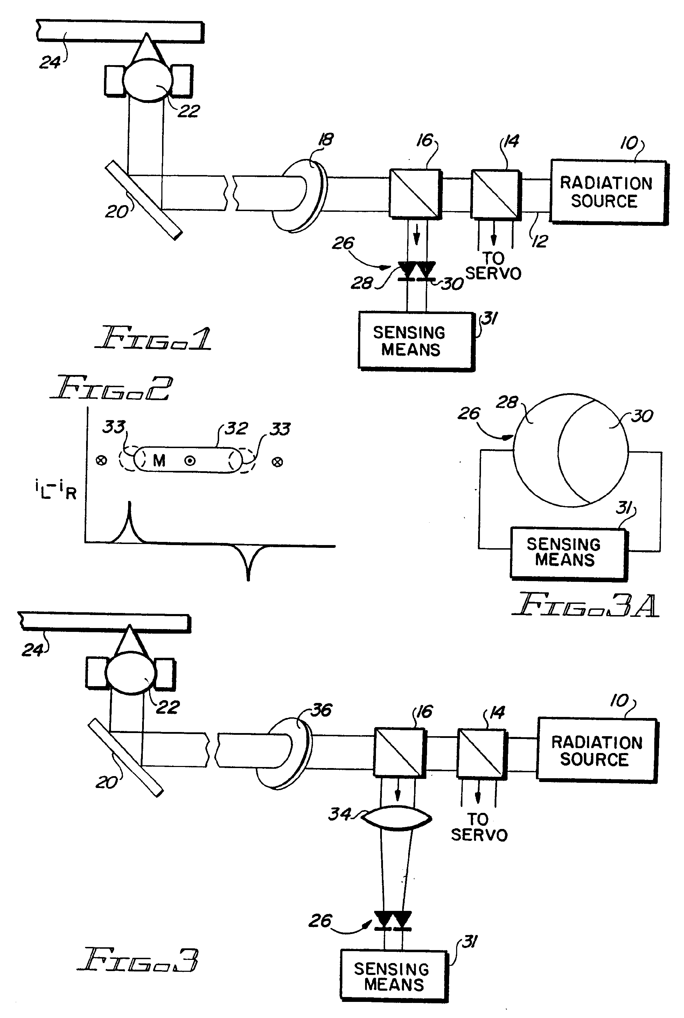

As shown in Fig. 1 of the drawings, the detector system for magneto-optical storage comprises a radiation source 10 which in a specific embodiment comprises a laser. The laser produces a collimated beam 12 which is directed through a 70% transmitting beam splitter 14 and a polarization analyzer 16. Polarization analyzer 16 reflects x polarized light and transmits y polarized light. The y polarized beam transmitted through the analyzer 16 is then incident on a birefringent compensator plate 18 which produces a small x polarized component out of phase with the y component. This x component acts as the phase shifted local oscillator necessary for far field edge detection.

In the embodiment shown in Fig.1, the compensator plate 18 comprises a quarter wave plate oriented at an optimum angle with respect to both the x and y directions so that linearly polarized input light is made elliptically polarized. The beam is then directed by turning mirror 20 to objective lens 22 which focuses the beam to a selected location on magneto-optical recording disk 24. Items 20 through 24 are rotated 90 degrees for clarity in the drawing. The reflected light from a previously recorded signal is then guided to the detection system by the same optical components including the objective lens 22, turning mirror 20 and birefringent compensator plate 18. As the reflected beam passes through birefringent compensator plate 18, the beam is made more elliptically polarized. After propagating through the birefringent plate 18, the x polarized component is directed into the data detection beam line by the polarization analyzer 16. Part of the y polarized component is directed into the servo system (not shown) by beam splitter 14, and the rest returns to the laser. The x component is directed into the split photodetector 26. When no recorded transition is present on the selected location on recording disk 24, equal illumination is produced on both photodiodes 28 and 30 which make up split photodetector 26. When the resulting signals are sensed differentially, no net signal results. However, when a recorded transition is present, the optical power is greater on one photodiode 28 than the other 30 and a detection signal is produced by sensing means 31.

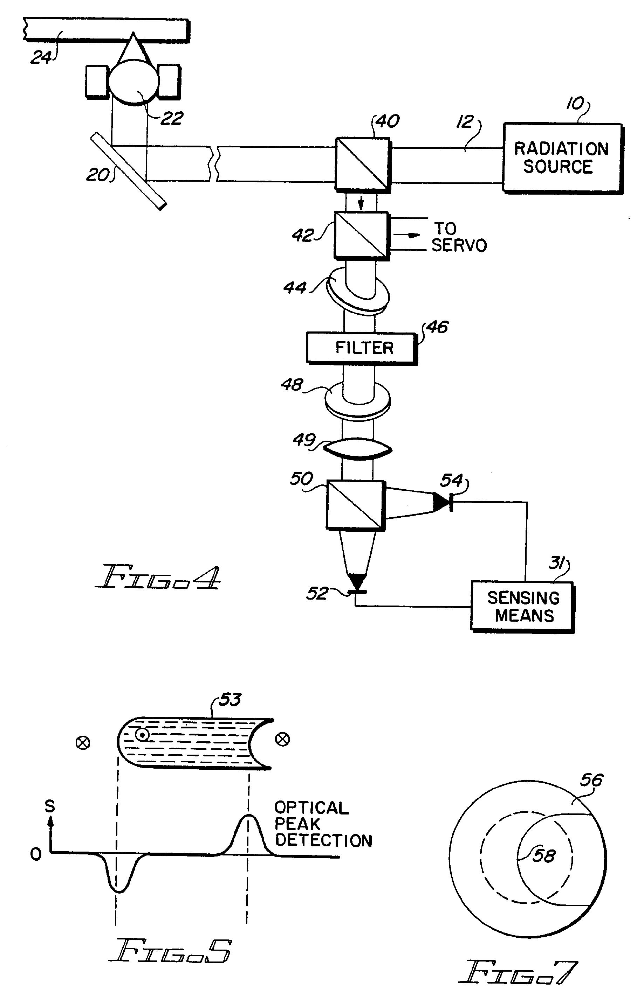

Fig.2 shows a typical signal produced by a reversal of magnetization along the track which shows marks recorded as domains of up and down magnetization to produce recorded domain 32 and in which two positions of the laser beam are shown as dashed circles. The light reflected by the recording medium can be decomposed into a local oscillator component along the direction of the incident laser, and a signal component in the orthogonal direction. The sign of this signal component changes at a transition. When a transition is located at the center of the laser spot, the power at the left detector 28 is different from the detector 30 on the right. In regions of uniform magnetization, both the left detector 28 and the right detector 30 have identical illumination. Thus, as the laser spot scans over the recorded transition 33, the difference in power leads to a difference in the photocurrents (i_{L} -i_{R}) of the two sides of the detector which is produced by circuits within sensing means 31 and this difference varies as shown in Fig. 2. The operation of the detection system does not depend critically upon the method of producing the x component which acts as the phase shifted local oscillator necessary for far field edge detection.

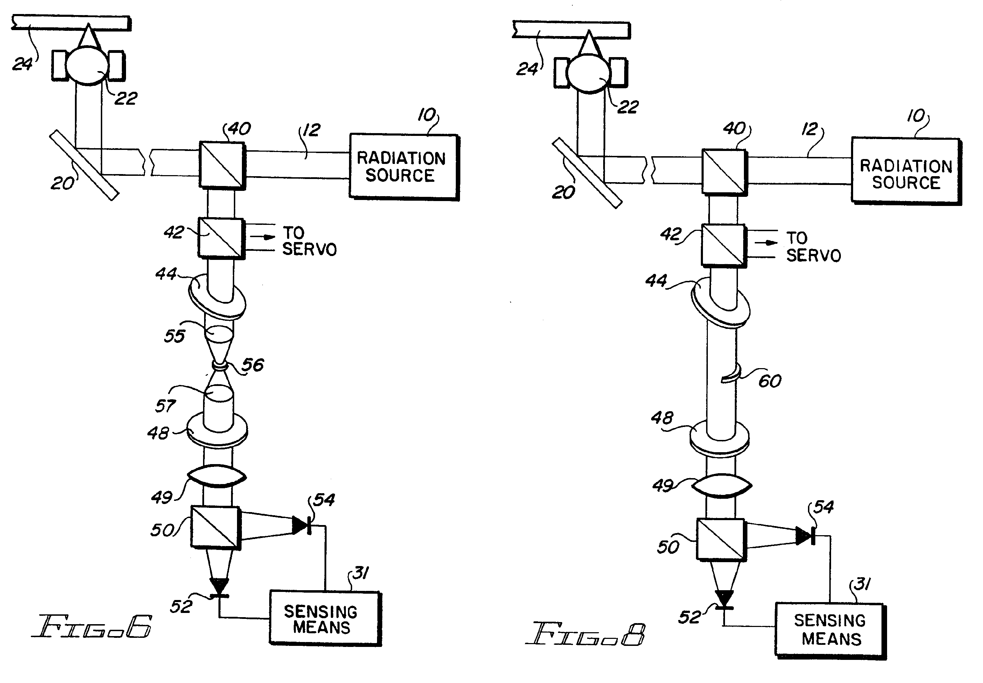

An alternate embodiment of the invention is shown in Fig. 3 in which the x component, which is directed into the data detection beam line, is partially focused by a lens 34 and directed into the split photodetector 26. When the split photodetector 26 is placed at or near the focal plane of lens 34, the phase shift required for the local oscillator is zero or quite small. Such a local oscillator can be obtained by replacing the birefringent plate 18 in Fig. 1 with a diattenuating element. A diattenuating element is an optical device with a transmission or attenuation coefficient that depends upon polarization, sometimes termed a partial polarizing element, weak polarizer or dichroic element. One suitable such device is a Brewster plate 36 (Fig. 3) oriented at about 45 degrees with respect to the y axis so that the plane of linearly polarized light is rotated. The light that is reflected from the recording medium then propagates back through the Brewster plate 36, and the x polarized component is picked off by polarization beam splitter 16 and directed into the detection channel. The remaining y polarized light goes back to the servo channel and the laser. The lens 34 then reimages the plane of the medium onto (or very near) the split photodetector 26. Such a re-imaging edge detection channel is distinct from but operates in a manner similar to the far field system in Fig. 1. The line of the split in the photodetector may be straight or curved to best match the shape of the images of the edges of the magnetic domains. An example of photodetectors for a curved line is shown in Fig. 3a.

An alternate embodiment of a detector system for magneto-optical storage is shown in Fig. 4, and this system comprises a radiation source 10 which produces a collimated beam 12 which is directed through a polarization beam splitter 40 which reflects 100 per cent of the x polarized light along with about 25 percent of the y polarized light. The transmitted light is directed to a selected area of the magneto-optical recording disk 24 by means of turning mirror 20 and objective lens 22. Ideally, there is no phase shift between x and y polarization on reflection from the disk 24, and the reflected light is directed into the data detection beam line by beam splitter 40. The resulting beam is directed to polarization insensitive beam splitter 42 which separates the servo channel from the signal channel. In the signal channel, the light passes through a variable compensator plate 44 which imposes a phase shift between x and y polarizations. A matched filter 46, a half wave plate 48 and a polarization beam splitter 50 then direct beams of equal intensity and orthogonal polarization into two separate photodiodes 52 and 54. Lens 49 merely insures that all light reaches the photodetectors 52 and 54.

The matched filter 46 is designed to direct essentially all the x polarized signal light into one photodetector or another, and differs from previously disclosed optical matched filters by incorporating birefringent optical elements. Another embodiment of the matched filter is shown in Fig. 8. In this embodiment a half of a half wave plate 60 is placed in the path between the variable compensator plate 44 and the half wave plate 48. This embodiment provides a far-field separated detector edge detection system. In this embodiment of the filter the collimated beam returning from the medium and having passed through the compensator plate 44 is affected by the birefringent filter as follows: The optical length of the filter for light polarized in the local oscillator (y) direction is constant across the filter aperture, whereas in the orthogonal (x or signal) polarization the optical length changes by one half wave along a diameter of the filter. When the signal polarization has a uniform sign at the filter plane, this matched filter reverses the sign for half of the beam area. The signal amplitude averaged over the beam area is zero, and the optical powers on the two detectors 52 and 54 are equal. The adjustable half wave plate 48 is oriented to equalize the local oscillator powers at the two detectors. When a transition is centered under the read laser beam, the sign reversal of the signal polarization amplitude due to the difference in Kerr rotations for up and down magnetization is compensated by the reversal due to the filter phase shift. The average polarization of the light exiting the filter is altered, causing an imbalance in the powers reaching the two detectors 52, 54. The resulting electrical signals are similar to those in Fig. 2. Proper operation of this far-field matched filter system requires that the compensator plate 44 be adjusted to impose a 90 degree phase shift between y and x polarized light when the Kerr ellipticity of the medium is zero and the incident read beam is linearly polarized as shown. Other cases require different compensator phase shifts.

An alternate embodiment of the matched filter is shown in Fig. 6, and in this embodiment a first lens 55 is provided to focus the reflected beam onto a spatially non-uniform birefringent element 56. A second lens 57 recollimates this beam and directs it through half wave plate 48. The spatially non-uniform birefringent element comprises a half wave plate 56 positioned with an edge 58 which matches the edge of the domain as shown in Fig. 7 of the drawing.

The optical length of the filter for light polarized in the local oscillator direction (y) is constant, whereas in the orthogonal polarization, the optical length changes by one half wave along a straight or curved line which best matches the curved edge of the image of the recorded mark on the recording medium 24. When the signal polarization has a uniform sign across the image, the matched filter reverses the sign for half of the image area. The signal amplitude averaged over the image is zero, and the polarization exiting the filter is the same as the local oscillator polarization. The optical powers on the two detectors 52, 54 are then equal. When a transition is imaged onto the filter 56, the reversal of the signal amplitude due to Kerr-rotation is compensated by the reversal due to the filter phase shift. The polarization of the light exiting the filter is rotated, causing an imbalance in the power at the two detectors 52, 54. The resulting electrical signal is as shown in Fig. 5 which shows a magnetic domain 53 written by direct overwrite. Leading edge signals have opposite sign to trailing edge signals. The widths are narrower than the width of conventionally measured signals because the filter compensates for the curvature of the edges of the domain. No light is lost to apertures since the matched filter 46 alters phase only.

A further embodiment comprises the use of a birefringent hologram or grating system to replace the imaging optics and the matched filter. The hologram would have approximately the same optical transfer function as the filter previously described. Such a hologram can be obtained by superimposing the hologram of a domain boundary in one polarization with that of a uniform track in the other polarization, both as imaged through the objective lens.

## Claims

1. A magneto-optical storage system comprising
a source of radiation (10);
means (22, 20) for directing radiation from the source to a storage medium upon which data is recorded in the form of marks defined by domains of a first and a second magnetization state;
means (22, 20, 40) for directing the radiation reflected from said recorded mark to a detection channel;
the system being characterized in that :
said detection channel comprising a beam adjustment means, a first and a second optical detector (52, 54) in optical communication with the beam adjustment means, said beam adjustment means comprising birefringent compensator means (44) and an optical matched filter (46, 56, 60) arranged to adjust the reflected radiation beam such that when the radiation incident on said medium is located on a transition between said first and second magnetization states, the amount of reflected radiation on said first optical detector will be substantially unequal to the amount of reflected radiation on said second optical detector, and when said radiation incident on the medium is located on a nontransition area, the amount of reflected radiation on said first optical detector will be approximately equal to the amount of reflected radiation on said second optical detector.

2. A system as claimed in claim 1 wherein the optical matched filter (46, 56, 60) acts in the far field of said detection channel optical components.

3. A system as claimed in claim 1 or claim 2, wherein said optical matched filter (46, 56, 60) comprises a spatially nonuniform birefringent element (56).

4. A system as claimed in claim 3, wherein the spatially nonuniform birefringent element (56) contains a transition region which matches the average curvature of the images of the edges of said magnetic domains written on said storage medium.

5. A system as claimed in claim 1 or claim 2 wherein the optical matched filter (46, 56, 60) comprises a holographic optical element or grating with optical transfer function approximating that of a spatially nonuniform birefringent element.

6. A system as claimed in claim 5 wherein the holographic optical element or grating has an optical transfer function approximating that of a spatially nonuniform birefringent element having a transition region which matches the average curvature of the images of the edges of said magnetic domains written on said storage medium.

7. A system as claimed in claim 1 or claim 2, wherein the optical matched filter comprises a half wave plate (60) arranged to impose a 180 degree retardation on one-half of said beam with respect to the other half of said beam.

## Patentansprüche

1. Ein magneto-optisches Speichersystem, umfassend:
eine Strahlungsquelle (10),
ein Mittel (20, 22) zur Lenkung der Strahlung von der Quelle zu einem Speichermedium, auf dem Daten in Form von Markierungen aufgezeichnet werden, die durch Bereiche mit einem ersten und einem zweiten Magnetisierungszustand definiert sind, und
ein Mittel (22, 20, 40) zur Lenkung der von der aufgezeichneten Markierung reflektierten Strahlung zu einem Erkennungskanal,
wobei das System dadurch gekennzeichnet ist, daß:
der Erkennungskanal ein Mittel zur Justierung des Strahls sowie einen ersten und einen zweiten optischen Detektor (52, 54) in optischer Kommunikation mit dem Mittel zur Justierung des Strahls umfaßt, wobei das Mittel zur Justierung des Strahls ein doppelbrechendes Kompensatormittel (44) und ein angepaßtes optisches Filter (46, 56, 60) umfaßt, das so angeordnet ist, daß es den reflektierten Strahl so justiert, daß, wenn die auf das Medium treffende Strahlung sich auf einem Übergang zwischen dem ersten und dem zweiten Magnetisierungszustand befindet, die Menge der auf den ersten optischen Detektor reflektierten Strahlung erheblich von der Menge der auf den zweiten optischen Detektor reflektierten Strahlung abweicht, und wenn die auf das Medium treffende Strahlung sich auf einem Bereich ohne Übergang befindet, die Menge der auf den ersten optischen Detektor reflektierten Strahlung der Menge der auf den zweiten optischen Detektor reflektierten Strahlung ungefähr entspricht.

2. Ein System nach Anspruch 1, bei dem das angepaßte optische Filter (46, 56, 60) im Fernfeld der optischen Komponenten des Erkennungskanals wirkt.

3. Ein System nach Anspruch 1 oder 2, bei dem das angepaßte optische Filter (46, 56, 60) ein räumlich uneinheitliches doppelbrechendes Element (56) umfaßt.

4. Ein System nach Anspruch 3, bei dem das räumlich uneinheitliche doppelbrechende Element (56) einen Übergangsbereich enthält, der der durchschnittlichen Biegung der Bilder der Ränder der magnetischen Bereiche umfaßt, die auf das Speichermedium geschrieben werden.

5. Ein System nach Anspruch 1 oder 2, bei dem das angepaßte optische Filter (46, 56, 60) ein holographisches optisches Element oder ein Beugungsgitter mit einer optischen Übertragungsfunktion umfaßt, die der eines räumlich uneinheitlichen doppelbrechenden Elements nahekommt.

6. Ein System nach Anspruch 5, bei dem das holographische optische Element oder das Beugungsgitter eine optische Übertragungsfunktion hat, die der eines räumlich uneinheitlichen doppelbrechenden Elements nahekommt, das einen Übergangsbereich enthält, der der durchschnittlichen Biegung der Bilder der Ränder der magnetischen Bereiche umfaßt, die auf das Speichermedium geschrieben werden.

7. Ein System nach Anspruch 1 oder 2, bei dem das angepaßte optische Filter eine halbe Wellenplatte (60) umfaßt, die so angeordnet ist, daß sie bei einer Hälfte des Strahls eine Verzögerung um 180 Grad gegenüber der anderen Hälfte des Strahls erzwingt.

## Revendications

1. Système de stockage magnéto-optique comprenant:
une source de rayonnement (10);
des moyens (22, 20) pour diriger le rayonnement en provenance de la source vers un support d'enregistrement sur lequel des données sont enregistrées sous la forme de marques définies par des domaines d'un premier et d'un second états de magnétisation;
des moyens (22, 20, 40) pour diriger le rayonnement réfléchi par ladite marque enregistrée vers un canal de détection;
le système étant caractérisé en ce que:
ledit canal de détection comprend un moyen de réglage de faisceau, un premier et un second moyens (52, 54) détecteurs optiques en communication optique avec le moyen de réglage de faisceau, ledit moyen de réglage de faisceau comprenant un moyen (44) compensateur biréfringent et un filtre adapté optique (46, 56, 60) disposé pour régler le faisceau de rayonnement réfléchi de telle sorte que lorsque le rayonnement incident sur ledit support est situé sur une transition entre lesdits premier et second états de magnétisation, la quantité de rayonnement réfléchi sur ledit premier détecteur optique sera sensiblement inégale à la quantité de rayonnement réfléchi sur ledit second détecteur optique, et lorsque ledit rayonnement incidentsur le support est situé sur une zone de non transition, la quantité de rayonnement réfléchi sur ledit premier détecteur optique sera approximativement égale à la quantité de rayonnement réfléchi sur ledit second détecteur optique.

2. Système selon la revendication 1 dans lequel le filtre adapté optique (46, 56, 60) agit dans le champ lointain desdites composantes optiques de canal.

3. Système selon la revendication 1 ou la revendication 2, dans lequel ledit filtre adapté optique (46, 56, 60) comprend un élément (56) biréfringent non uniforme dans l'espace.

4. Système selon la revendication 3, dans lequel l'élément (56) biréfringent non uniforme dans l'espace contient une région de transition qui correspond à la courbure moyenne des images des bords desdits domaines magnétiques écrits sur ledit support d'enregistrement.

5. Système selon la revendication 1 ou la revendication 2 dans lequel le filtre adapté optique (46, 56, 60) comprend un élément ou réseau optique holographique avec une fonction de transfert optique approximativement égale à celle d'un élément biréfringent non uniforme dans l'espace.

6. Système selon la revendication 5 dans lequel l'élément ou réseau optique holographique a une fonction de transfert optique approximativement égale à celle d'un élément biréfringent non uniforme dans l'espace ayant une région de transition qui correspond à la courbure moyenne des images des bords desdits domaines magnétiques écrits sur ledit support d'enregistrement.

7. Système selon la revendication 1 ou la revendication 2, dans lequel le filtre adapté optique comprend une plaque demi-onde (60) disposée pour imposer un retard de 180 degrés de la moitié dudit faisceau par rapport à l'autre moitié dudit faisceau.
